# EUROPEAN PATENT APPLICATION

(11) **EP 3 970 965 A1**
(43) Date of publication of application: **23.03.2022**
(21) Application number: 20196740.3
(22) Date of filing: 17.09.2020
(51) Int. Cl.: B32B 15/08, B32B 15/20, B60R 13/08, B62D 29/04, F16F 1/373, F16F 9/30, F16F 15/02, C09J 7/38, C09J 133/08

(54) **MULTILAYER CONSTRUCTION WITH DAMPING PROPERTIES**

(71) Applicant: 3M Innovative Properties Company, Saint Paul, MN 55133-3427 (US)
(72) Inventor: Boehme, Achim, 41453 Neuss (DE); Bieber, Pierre, 41453 Neuss (DE); Konietzny, Roman, 41453 Neuss (DE); D'Hollander, Stijn, 2070 Zwijndrecht (BE); Oertel, Ralf, 41453 Neuss (DE); Eichhorn, Georg, 41453 Neuss (DE)
(74) Representative: Hettstedt, Stephan

(57) **Abstract**

The present disclosure relates to a multilayer construction which comprises:
a) at least one layer of a precursor of a pressure sensitive adhesive composition comprising a radiation-curable (co)polymeric base component having a weight-average molecular weight (M_{w}) no greater than 500.000 g/mol;
b) at least one constraining layer; and
c) optionally, at least one spacer layer.

## Description

### Technical Field

The present disclosure relates generally to the field of multilayer constructions, more specifically to the field of multilayer constructions having damping properties. The present disclosure also relates to a method of manufacturing such multilayer constructions, and to uses thereof.

### Background

The engine, drive train and other portions of a vehicle (e.g., automobiles, airplanes, motorboats, etc.) can generate mechanical vibrations that propagate through the body of the vehicle as structure borne noise. Such structure born noise can transform into air borne noise. It can be useful to damp these structural vibrations before their kinetic energy is radiated as air borne noise into other vehicle areas (e.g., inside a passenger compartment).

Typically, one or more applications of viscoelastic materials like bitumen or sprayed plastic masses (i.e., single layer damping material) are coated or otherwise applied onto, e.g., the surface of a body panel of a vehicle for damping these structural vibrations. The deformation of the body panel and attached viscoelastic layer can lead to stretching and/or compressing of the polymer chains within the viscoelastic material, resulting in the dissipation of mechanical energy in the form of, e.g., structural borne vibration (e.g., from the engine, tire/road interactions, compressors, fans, etc.) and the damping of vibrations.

Exemplary damping materials and constructions are described e.g. in US Pat. No. 2,069,413 (Leadbetter) and US Pat. No. 5,186,996 (Alts).

The viscoelastic material layer or dissipating layer used in known damping constructions typically comprise a viscoelastic polymer, in particular a pressure sensitive viscoelastic polymer. Although this type of viscoelastic material has some benefits in terms of providing advantageous adhesion properties, they are not always satisfactory when it comes to meeting demanding sustainability requirements.

### Summary

Without contesting the technical advantages associated with the damping materials known in the art, there is still a need for a construction providing excellent damping characteristics whilst providing reduced overall volatile organic compounds (VOC) levels, as well as low odour performance attribute. Those attributes have been identified as critical requirements for various kind of interior applications (occupational hygiene and occupational safety) such as e.g. in the construction market or in the automotive or electronics industries.

According to one aspect, the present disclosure relates to a multilayer construction which comprises:
a) at least one layer of a precursor of a pressure sensitive adhesive composition comprising a radiation-curable (co)polymeric base component having a weight-average molecular weight (M_{w}) no greater than 500.000 g/mol;
b) at least one constraining layer; and
c) optionally, at least one spacer layer.

In another aspect, the present disclosure relates to a method of manufacturing a multilayer construction as described above, which comprises the steps of:
a) providing at least one layer of a precursor of a pressure sensitive adhesive composition comprising a (viscoelastic) radiation-curable (co)polymeric base component having a weight-average molecular weight (M_{w}) no greater than 500.000 g/mol;
b) providing at least one constraining layer;
c) optionally, providing at least one spacer layer; and
d) applying the at least one constraining layer onto the first major surface of the at least one layer of a precursor of a pressure sensitive adhesive composition; and
e) optionally, applying the at least one spacer layer onto the second major surface of the at least one layer of a precursor of a pressure sensitive adhesive composition.

In still another aspect, the present disclosure relates to a composite article comprising a multilayer construction as described above applied on at least part of the surface of the article.

In yet another aspect, the present disclosure relates to the use of a multilayer construction as described above for industrial applications.

### Brief Description of the Drawings

**FIG. 1** is a cross-sectional view of a schematic representation of a multilayer construction according to one exemplary aspect of the present disclosure.
**FIG. 2** is a cross-sectional view of a schematic representation of a multilayer construction according to another exemplary aspect of the present disclosure.
**FIG. 3** is a cross-sectional view of a schematic representation of a composite article according to one exemplary aspect of the present disclosure.
**FIG. 4** is a cross-sectional view of a schematic representation of composite article according to another exemplary aspect of the present disclosure.
**FIG. 5** is a cross-sectional view of a schematic representation of a composite article according to another exemplary aspect of the present disclosure.
**FIG. 6** is a cross-sectional view of a schematic representation of a composite article according to another exemplary aspect of the present disclosure.
**FIG. 7** is a cross-sectional view of a schematic representation of a composite article according to another exemplary aspect of the present disclosure.

### Detailed description

According to a first aspect, the present disclosure relates to a multilayer construction which comprises:
a) at least one layer of a precursor of a pressure sensitive adhesive composition comprising a (viscoelastic) radiation-curable (co)polymeric base component having a weight-average molecular weight (M_{w}) no greater than 500.000 g/mol;
b) at least one constraining layer; and
c) optionally, at least one (kinetic) spacer layer.

In the context of the present disclosure, it has surprisingly been found that a multilayer construction as described above provides excellent damping characteristics, in particular vibration damping characteristics, whilst providing reduced overall volatile organic compounds (VOC) levels, as well as low odour performance attribute.

The multilayer as described above has an excellent ability to control and reduce resonance-induced noise, vibration and fatigue in a broad range of temperatures (typically from 0 to 60°C). The multilayer construction as described above is further characterized by an excellent resistance to slippage (or creep), in particulate when the latter further comprises a spacer layer.

Without wishing to be bound by theory, it is believed that these excellent characteristics and performance attributes are due in particular to the presence of a layer of a precursor of a pressure sensitive adhesive composition comprising a (viscoelastic) radiation-curable (co)polymeric base component having a weight-average molecular weight (Mw) no greater than 500.000 g/mol, when used in combination with at least one constraining layer.

Still without wishing to be bound by theory, it is believed that the above layer of a precursor of a pressure sensitive adhesive composition, when applied to a vibrating structure as part of the above multilayer construction, has an outstanding ability to convert the vibration generated into negligible heat, thus reducing vibration amplitudes and structure-borne noise. As such, the layer of a precursor of a pressure sensitive adhesive composition for use herein has the ability to function as an efficient dissipating layer.

The layer of a precursor of a pressure sensitive adhesive as described above is surprisingly provided with beneficial workability and processability properties such as e.g. advantageous pumpability, flowability, extrudability, applicability, and coatability characteristics, in particular under relatively mild processing conditions, which in turn are believed to beneficially impact the overall low VOC characteristics and low odour performance of the ultimately produced multilayer construction. Advantageously still, the precursor composition of a pressure sensitive adhesive as described above may be formed and processed under the so-called hotmelt processing conditions, without causing unwanted gelling reactions.

As such, the multilayer construction as described above is particularly suitable for interior applications, in particular for transportation market applications and construction market applications, in particular for the automotive manufacturing industry, more in particular for the damping treatment of body in white structures.

The multilayer construction as described herein is suitable to act as a damping material or a damping system that is able to dissipate vibration energy within a vibrating surface, e.g. panel of a vehicle or any other vehicle, vessel or appliance body part and/or any part of other machines or systems generating vibrations and/or noise.

In the context of the present disclosure, the expression "free-radical curable precursor" is meant to designate a composition which can be cured using an initiator containing or able to produce a free-radical. Similarly, the expression "free-radical curable functional group" is meant to designate a functional group which can be cured using free-radicals. Free radicals can be produced by an initiator containing or able to produce a free-radical. The term "initiator" is meant to refer to a substance or a group of substances able to start or initiate or contribute to the curing process of the curable precursor. Alternatively, free radicals can be produced without the presence of an initiator by direct exposure to actinic radiation for instance electron beam or gamma radiation.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, polycarbonate (PC), polyvinylchloride (PVC), polyamide (PA), polyurethanes (PUR), thermoplastic elastomers (TPE), polyoxymethylene (POM), polystyrene (PS), poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

As used herein, the expression "hot melt processable polymeric composition" is meant to designate a polymer or a blended polymeric material with a melt viscosity profile such that it can be coated on a substrate or carrier in a thin layer at a process temperature significantly above normal room temperature.

The multilayer construction of the present disclosure comprises at least one layer of a precursor of a pressure sensitive adhesive composition comprising a (viscoelastic) radiation-curable (co)polymeric base component having a weight-average molecular weight (Mw) no greater than 500.000 g/mol.

As already indicated, the layer of a precursor of a pressure sensitive adhesive composition for use herein acts as an efficient dissipating layer, which is capable of dissipating energy when being deformed and/or stressed and/or compressed and/or when being exposed to shear and/or strain forces within the multilayer construction. Typically, most of the energy dissipation of is due to shear strain within the dissipating layer. In those executions where the multilayer construction further comprises a spacer layer, in particular a kinetic spacer layer, some energy might be further dissipated in the spacer layer.

(Co)polymeric base components for use herein are not particularly limited, as long as they have a weight-average molecular weight (M_{w}) no greater than 500.000 g/mol. Suitable (co)polymeric base components for use herein may be easily identified by those skilled in the art, in the light of the present disclosure. Unless otherwise indicated, the weight-average molecular weight (M_{w}) of the (co)polymeric base component for use herein is determined by conventional gel permeation chromatography (GPC) using appropriate techniques well known to those skilled in the art.

In one advantageous aspect, the (co)polymeric base component has a weight-average molecular weight (M_{w}) no greater than 480.000 g/mol, no greater than 450.000 g/mol, no greater than 420.000 g/mol, no greater than 400.000 g/mol, no greater than 380.000 g/mol, no greater than 350.000 g/mol, no greater than 320.000 g/mol, no greater than 300.000 g/mol, no greater than 290.000 g/mol, no greater than 280.000 g/mol, no greater than 270.000 g/mol, no greater than 260.000 g/mol, no greater than 250.000 g/mol, no greater than 240.000 g/mol, no greater than 230.000 g/mol, no greater than 220.000 g/mol, or even no greater than 210.000 g/mol.

In another advantageous aspect, the (co)polymeric base component for use herein has a weight-average molecular weight (M_{w}) greater than 5.000 g/mol, greater than 10.000 g/mol, greater than 50.000 g/mol, greater than 80.000 g/mol, greater than 100.000 g/mol, greater than 120.000 g/mol, greater than 150.000 g/mol, greater than 160.000 g/mol, greater than 170.000 g/mol, greater than 180.000 g/mol, greater than 190.000 g/mol, or even greater than 200.000 g/mol.

More advantageously, the (co)polymeric base component for use herein has a weight-average molecular weight (M_{w}) comprised in a range from 6.000 to 480.000 g/mol, from 6.000 to 450.000 g/mol, from 6.000 to 420.000 g/mol, from 6.000 to 400.000 g/mol, from 6.000 to 380.000 g/mol, from 6.000 to 360.000 g/mol, from 6.000 to 340.000 g/mol, from 10.000 to 320.000 g/mol, from 30.000 to 300.000 g/mol, from 50.000 to 300.000 g/mol, from 80.000 to 300.000 g/mol, from 100.000 to 300.000 g/mol, from 100.000 to 300.000 g/mol, from 150.000 to 300.000 g/mol, from 200.000 to 300.000 g/mol, from 220.000 to 300.000 g/mol, from 220.000 to 280.000 g/mol, or even from 220.000 to 260.000 g/mol.

According to an advantageous aspect of the disclosure, the (co)polymeric base component for use herein is a hot melt processable polymeric composition.

According to a more advantageous aspect of the disclosure, the (co)polymeric base component is selected from the group consisting of thermoplastic materials, elastomeric materials, thermoplastic elastomer materials, thermoplastic non-elastomeric materials, and any combinations or mixtures thereof.

According to an even more advantageous aspect, the (co)polymeric base component for use herein is selected from the group consisting of polyacrylics, rubber-based elastomeric materials, rubber-based non-elastomeric materials, polycarbonates, polyacrylonitriles, polyvinyl chlorides, alkylene-vinyl acetate copolymers, alkylene-acrylic acid copolymers, polyurethanes, polyesters, polyamides, polyolefins, polyphenylene oxides, and any combinations or mixtures thereof.

According to another advantageous aspect, the (co)polymeric base component for use herein is selected from the group consisting of (amorphous) thermoplastic materials, and any combinations or mixtures thereof.

According to a more advantageous aspect of the disclosure, the (co)polymeric base component for use herein is selected from the group consisting of rubber-based elastomeric materials, rubber-based non-elastomeric materials, polyacrylics, and any combinations or mixtures thereof.

In one particularly advantageous aspect, the (co)polymeric base component for use herein is selected from the group consisting of rubber-based (thermoplastic) elastomeric materials. More advantageously, the (co)polymeric base component for use herein is selected from the group consisting of olefinic block copolymers, acrylate block copolymers, styrenic block copolymers, styrene-isoprene-styrene block copolymers, styrene-butadienestyrene block copolymers, styrene-ethylene/butadiene-styrene block copolymers, styrene-ethylene/propylene-styrene block copolymers, styrene-butadiene random copolymers, polyisoprene polymers, polybutadiene polymers, halogenated butyl rubbers, and any combinations or mixtures thereof.

In another particularly advantageous aspect of the disclosure, the radiation-curable (co)polymeric base component for use herein comprises a (meth)acrylate-based (co)polymer component.

In another advantageous aspect, the radiation-curable (co)polymeric base component for use herein is free-radical curable, in particular curable with the provision of (high-energy actinic) radiation, more in particular UV radiation, e-beam radiation or gamma radiation, more in particular UV-C radiation.

In one further advantageous aspect, the radiation-curable (co)polymeric base component for use herein comprises at least one radiation-reactive functional group (X), in particular a free-radical curable functional group (X), in particular curable with the provision of (high-energy actinic) radiation, more in particular UV radiation, e-beam radiation or gamma radiation, more in particular UV-C radiation.

According to an advantageous aspect, the radiation-reactive functional group (X) for use herein is a free-radical curable functional group, in particular selected from the group consisting of Norrish type (I) free-radical curable functional groups, Norrish type (II) free-radical curable functional groups, and any combinations or mixtures thereof.

According to a more advantageous aspect, the radiation-reactive functional group (X) for use herein is a free-radical curable functional group, in particular selected from the group consisting of Norrish type (I) free-radical curable functional groups, Norrish type (II) free-radical curable functional groups, and any combinations or mixtures thereof.

According to an even more advantageous aspect, the radiation-reactive functional group (X) is selected from the group consisting of Norrish type (II) free-radical curable functional groups, in particular from the group consisting of benzophenones, substituted benzophenones, benzyl formates, thioxanthones, and any combinations or mixtures thereof.

According to an even more advantageous aspect, the radiation-reactive functional group (X) for use herein is selected from the group consisting of Norrish type (II) free-radical curable functional groups, in particular from the group consisting of benzophenones, substituted benzophenones, and any combinations or mixtures thereof.

In one particular aspect of the disclosure, the radiation-curable (co)polymeric base component for use herein further comprises at least one reactive functional group (Y) which is different from the at least one radiation-reactive functional group (X).

In one typical aspect, the at least one reactive functional group (Y) for use in the present disclosure is not capable of chemically reacting with the at least one radiation-reactive functional group (X).

According to one preferred aspect of the disclosure, the at least one reactive functional group (Y) is selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

According to another preferred aspect of the disclosure, the at least one reactive functional group (Y) for use herein is selected from the group consisting of carboxylic acids, and any combinations or mixtures thereof.

In one preferred aspect of the disclosure, the radiation-curable (co)polymeric base component for use herein comprises a (meth)acrylate-based (co)polymer component, wherein the (co)polymeric base component comprises the (co)polymerization reaction product of a (co)polymerizable material comprising:
i. C₁-C₃₂ acrylic acid ester monomer units;
ii. ethylenically unsaturated monomer units which are copolymerizable with monomer units (i); and
iii. optionally, further ethylenically unsaturated monomer units which are copolymerizable with monomer units (i) and/or (ii).

In another preferred aspect of the disclosure, the radiation-curable (meth)acrylate-based (co)polymer component comprises the (co)polymerization reaction product of a (co)polymerizable material comprising:
i. C₁-C₃₂ acrylic acid ester monomer units;
ii. ethylenically unsaturated monomer units copolymerizable with monomer units (i) and having the at least one radiation-reactive functional group (X); and
iii. optionally, further ethylenically unsaturated monomer units copolymerizable with monomer units (i) and/or (ii) and comprising the at least one reactive functional group (Y).

In one typical aspect of the disclosure, the C₁-C₃₂ (meth)acrylic acid ester monomer units (i) for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another typical aspect of the disclosure, the C₁-C₃₂ (meth)acrylic acid ester monomer units (i) for use herein are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.

In one advantageous aspect, the C₁-C₃₂ (meth)acrylic acid ester monomer units (i) for use in the disclosure are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In one more advantageous aspect, the C₁-C₃₂ (meth)acrylic acid ester monomer units (i) for use herein are selected from the group consisting of isooctyl acrylate, 2-ethylhexyl acrylate, and any combinations or mixtures thereof.

According to one exemplary aspect, the ethylenically unsaturated monomer units (ii) having the at least one radiation-reactive functional group (X) for use herein are selected from the group consisting of C₁-C₁₈ methacrylic acid ester monomer units comprising a free-radical curable functional group (X) selected from the group consisting of Norrish type (II) free-radical curable functional groups, in particular from the group consisting of benzophenones, substituted benzophenones, benzyl formates, thioxanthones, and any combinations or mixtures thereof.

According to one advantageous aspect, the ethylenically unsaturated monomer units (ii) having the at least one radiation-reactive functional group (X) are selected from the group consisting of C₁-C₁₈ methacrylic acid ester monomer units comprising a free-radical curable functional group (X) selected from the group consisting of benzophenones, substituted benzophenones, and any combinations or mixtures thereof.

According to an exemplary aspect, the optional further ethylenically unsaturated monomer units (iii) comprising the at least one reactive functional group (Y) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

According to one advantageous aspect of the disclosure, the optional further ethylenically unsaturated monomer units (iii) comprising the at least one reactive functional group (Y) are selected from the group consisting of (meth)acrylic acid monomers, in particular acrylic acid monomers, and any combinations or mixtures thereof.

According to a more advantageous aspect of the disclosure, the optional further ethylenically unsaturated monomer units (iii) comprising the at least one reactive functional group (Y) for use herein are selected from the group consisting of C₁-C₁₈ (meth)acrylic acid ester monomer units.

The radiation-curable (meth)acrylate-based (co)polymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

According to another advantageous aspect, the radiation-curable (meth)acrylate-based (co)polymer component for use herein comprises the essentially adiabatic (co)polymerization reaction product of the (co)polymerizable material. Essentially adiabatic polymerization methods using a batch reactor are described e.g. in U.S. Pat. No. 5,637,646 (Ellis).

In one beneficial aspect, the precursor of the pressure sensitive adhesive composition for use herein is substantially free of voids, in particular substantially free of voids resulting from the incorporation of physical foaming agents, hollow fillers, such as hollow polymeric particles, hollow glass microspheres or hollow ceramic microspheres.

In another beneficial aspect, the precursor of the pressure sensitive adhesive composition is free of thermal crosslinking agents and thermal crosslinking accelerators.

In still another beneficial aspect, the precursor of the pressure sensitive adhesive composition for use herein comprises no greater than 10%, no greater than 5%, no greater than 2%, no greater than 1%, or even no greater than 0.5% by volume of voids.

In yet another beneficial aspect, the layer of the precursor of a pressure sensitive adhesive composition for use in the multilayer construction of the disclosure has a density of no greater than 2.0 g/cm³, no greater than 1.5 g/cm³, or even no greater than 1.0 g/cm³.

According to one exemplary aspect, the layer of the precursor of a pressure sensitive adhesive composition takes the form of a polymeric non-foamed layer.

According to another exemplary aspect, the layer of the precursor of a pressure sensitive adhesive has a thickness in the range from 20 to 5000 micrometers, from 50 to 5000 micrometers, from 100 to 5000 micrometers, or even from 100 to 3000 micrometers.

According to still another exemplary aspect, the layer of the precursor of a pressure sensitive adhesive is continuous or discontinuous.

According to one advantageous aspect, the layer of the precursor of a pressure sensitive adhesive for use herein has a peel adhesion strength value greater than 3 N/cm, greater than 4 N/cm, greater than 5 N/cm, or even greater than 6 N/cm, when measured at 23°C according to a 90° peel adhesion test.

According to another advantageous aspect, the layer of the precursor of a pressure sensitive adhesive for use herein has a Volatile Organic Compound (VOC) value of less than 1500 ppm, less than 1200 ppm, less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, or even less than 60 ppm, less than 50 ppm, less than 30 ppm, less than 20 ppm, less than 15 ppm, less than 10 ppm, less than 8 ppm, less than 5 ppm, or even less than 3 ppm, when measured by thermal desorption analysis according to test method VDA278.

According to still another advantageous aspect, the layer of the precursor of a pressure sensitive adhesive for use herein has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, less than 60 ppm, less than 50 ppm, less than 30 ppm, less than 20 ppm, less than 15 ppm, less than 10 ppm, less than 8 ppm, or even less than 5 ppm, when measured by thermal desorption analysis according to test method VDA278.

According to yet another advantageous aspect, the layer of the precursor of a pressure sensitive adhesive for use herein has an odor score of no greater than 4, no greater than 3.5, no greater than 3.0, no greater than 2.5, or even no greater than 2.0, when measured according to the Odor Test described in the experimental section.

The multilayer construction of the present disclosure further comprises at least one constraining layer. Constraining layers for use herein are not particularly limited. Suitable constraining layers for use herein may be easily identified by those skilled in the art, in the light of the present disclosure.

The overall damping performance is improved by adding at least one constraining layer (constrained layer damping - CLD) to multilayer construction.

The constraining layer is typically selected such that it is not as elastic as the layer of a precursor of a pressure sensitive adhesive composition (acting as dissipating layer), and it may be attached on top of dissipating layer typically opposite of the panel to be damped (or vibrating surface). When the constraining layer is attached on top of the layer of a precursor of a pressure sensitive adhesive composition, each deformation of the panel leads not only to stretching and compressing of the polymer chains within the dissipating layer but also to shear within the dissipating layer. Thus, the multilayer construction comprising an additional constraining layer is more effective - in terms of damping properties - than the multilayer (damping) construction with only the dissipating layer.

In one typical aspect of the multilayer construction, the at least one constraining layer for use herein is continuous or discontinuous.

In one advantageous aspect, the constraining layer for use herein in the multilayer construction is arranged adjacent to, and in contact with the layer of the pressure sensitive adhesive.

In another advantageous aspect, the constraining layer for use herein in the multilayer construction is continuously or discontinuously in contact with the layer of the pressure sensitive adhesive.

In one particular aspect of the disclosure, the constraining layer for use herein comprises apertures and/or slits.

According to an advantageous aspect, the constraining layer for use herein comprises a material selected from the group consisting of metals, plastics, polymers, composites, siliceous, and any combinations or mixtures thereof.

According to one advantageous aspect, the constraining layer for use herein comprises a material selected from the group consisting of metals, in particular selected from the group consisting of aluminum, titanium, stainless steel, and any combinations, mixtures or alloys thereof.

According to a more advantageous aspect, the constraining layer for use herein comprises a material selected from the group consisting of aluminum, aluminum alloys, and any combinations or mixtures thereof.

According to another advantageous aspect, the constraining layer for use herein comprises a material selected from the group consisting of plastics, in particular selected from the group consisting of polycarbonates, and any combinations or mixtures thereof.

According to still another advantageous aspect, the constraining layer for use herein comprises a material selected from the group consisting of polymers and composites, in particular selected from the group consisting of non-woven and woven polymers, fiber composite mats, composite plates, composite sheets, plastic impregnated fiberglass mats, carbon fiber polymeric composite sheets, and any combinations or mixtures thereof.

In an exemplary aspect, the constraining layer for use in the multilayer construction of the disclosure has a thickness in the range from 20 to 5000 micrometers, from 50 to 5000 micrometers, from 80 to 5000 micrometers, from 80 to 3000 micrometers, or even from 100 to 3000 micrometers.

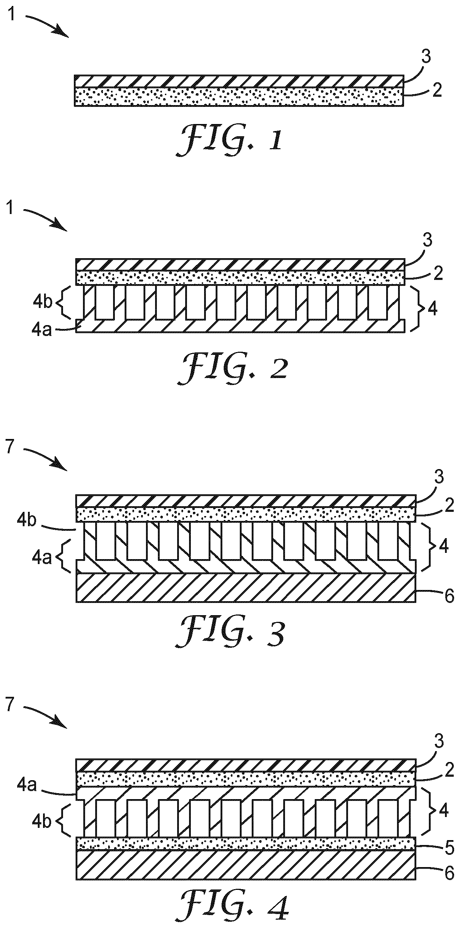

A multilayer construction according to one exemplary aspect of the present disclosure is schematically represented in **FIG. 1****,** wherein the multilayer construction **1** comprises a layer of a precursor of a pressure sensitive adhesive composition **2** and a constraining layer **3.**

The multilayer construction of the present disclosure may further comprise, as an optional layer, at least one spacer layer. Spacer layers for use herein are not particularly limited. Suitable spacer layers for use herein may be easily identified by those skilled in the art, in the light of the present disclosure.

The spacer layer for use herein typically fulfils the function of transporting the deformation or vibration of the panel to be damped (or vibrating surface) to the dissipating layer (also referred to herein as the layer of a precursor of a pressure sensitive adhesive composition) thereby generating an increased strain within the dissipating layer, which increases the damping. The spacer layers are also known as "stand-off layers and act as a strain magnifier.

In one advantageous aspect, the spacer layer for use in the multilayer construction is arranged adjacent to, and in contact with the at least one layer of the pressure sensitive adhesive.

In another advantageous aspect, the spacer layer for use herein is arranged adjacent to and in contact with two opposite layers of the pressure sensitive adhesive.

In still another advantageous aspect, the spacer layer for use herein is arranged between the constraining layer and the vibrating surface.

According to a preferred aspect, the spacer layer for use herein is a kinetic spacer layer which comprises in particular multiple (kinetic) spacer elements. The multiple (kinetic) spacer elements are in particular meant to transport the deformation of the panel to be damped (or vibrating surface) into the dissipating layer without adding much bending stiffness to the construction of the multilayer (damping) construction.

In a typical aspect, the kinetic spacer layer for use herein provides multiple spacer elements that are arranged between the constraining layer and the vibrating surface, when used for damping the vibrating surface.

According to an advantageous aspect, each spacer element for use herein has opposite ends, and at least one end of each of the multiple spacer elements is embedded in, bonded to, in contact with, or in close proximity with the at least one layer of the pressure sensitive adhesive.

According to a more advantageous aspect, at least in part, the at least one end of each spacer element for use herein interacts with the at least one layer of the pressure sensitive adhesive such that energy is dissipated within the multilayer construction through movement of the at least one end of each of the multiple spacer elements.

According to one particular aspect, the (kinetic) spacer elements for use herein are arranged so as to separate the constraining layer from the at least one layer of the pressure sensitive adhesive.

According to another particular aspect of the multilayer construction, the at least one layer of the pressure sensitive adhesive is arranged so as to separate the constraining layer from the kinetic spacer layer.

According to a typical aspect of the disclosure, the (kinetic) spacer elements for use herein contact the at least one layer of the pressure sensitive adhesive such that from 0 to 100% of the spacer elements are embedded in the at least one layer of the pressure sensitive adhesive.

In another typical aspect, the (kinetic) spacer elements are arranged equally spaced apart from each other within the kinetic spacer layer.

In one exemplary aspect, the (kinetic) spacer elements for use herein are arranged homogeneously or uniformly at locations within the kinetic spacer layer.

In another exemplary aspect, the (kinetic) spacer elements are arranged non-homogeneously or non-uniformly at locations within the kinetic spacer layer.

In still another exemplary aspect, the (kinetic) spacer elements are uniformly shaped and sized.

In yet another exemplary aspect, the (kinetic) spacer elements are non-uniformly shaped and sized.

In yet another exemplary aspect, the (kinetic) spacer elements for use herein cylindrical, pyramidal, barrel or spherical shaped.

According to a typical aspect of the disclosure, the kinetic spacer layer further comprises a base layer, wherein the kinetic spacer elements extend out of (or project from) the base layer. The base layer for use herein may be made out of (or comprises) the same material as the kinetic spacer elements. Alternatively, the base layer for use herein may be made out of (or comprises) a different material than the kinetic spacer elements.

According to one particular aspect, each of the kinetic spacer elements is an integral part of the base layer.

According to an advantageous aspect of the multilayer construction, the kinetic spacer elements for use herein comprise a material selected from the group consisting of ceramics, glass, metals (in particular aluminum), carbon, clay, foamed polyurethane, plastics (in particular polyester, polypropylene, polyethylene, acrylonitrile butadiene styrene, nylon, polyamides), and any combinations or mixtures thereof.

According to another advantageous aspect, the kinetic spacer elements have an average height in a range from 0.1 to 15 millimeters.

According to still another advantageous aspect, the base layer comprises a material selected from the group consisting of acrylate, polypropylene, polyester, and any combinations or mixtures thereof.

According to yet another advantageous aspect, the base layer for use herein has a thickness in the range from 100 to 3000 micrometers.

According to one particular aspect of the disclosure, the base layer comprises a netting, nonwoven or a film.

According to another particular aspect, the base layer comprises apertures and/or slits.

In one exemplary aspect of the multilayer construction, the layer of the precursor of a pressure sensitive adhesive is cured, wherein the curing step is performed in particular by a free-radical curing process, in particular an actinic radiation curing process, more in particular UV radiation, more in particular UV-C radiation.

In another exemplary aspect, the multilayer construction of the disclosure comprises a cured layer of a pressure sensitive adhesive which is obtained by curing the precursor of a pressure sensitive adhesive composition as described above, where the curing is performed in particular by a free-radical curing process, in particular an actinic radiation curing process, more in particular UV radiation, more in particular UV-C radiation.

In one preferred aspect of the present disclosure, the multilayer construction is a damping construction, in particular suitable for damping vibration (and/or noise) of a vibrating surface.

A multilayer construction according to another exemplary aspect of the present disclosure is schematically represented in **FIG. 2****,** wherein the multilayer construction **1** comprises a layer of a precursor of a pressure sensitive adhesive composition **2,** a constraining layer **3** and a spacer layer **4,** and wherein the spacer layer **4** comprises a base layer **4a** and a plurality of spacer elements **4b** extending out of the base layer.

According to a beneficial aspect, the multilayer construction of the present disclosure has a peel adhesion strength value greater than 3 N/cm, greater than 4 N/cm, greater than 5 N/cm, or even greater than 6 N/cm, when measured at 23°C according to a 90° peel adhesion test.

According to another beneficial aspect of the disclosure, the multilayer construction exhibits no slippage, when measured at 105°C according to a peel creep test.

According to still another beneficial aspect, the multilayer construction exhibits a slippage no greater than 1 mm, when measured at 150°C according to a peel creep test.

According to still another beneficial aspect, the multilayer construction has a Oberst loss factor greater than 0.10, greater than 0.15, greater than 0.20, greater than 0.25, or even greater than 0.30, when measured at 20°C according to the Oberst loss factor test described in the experimental section.

According to yet another beneficial aspect, the multilayer construction has a Volatile Organic Compound (VOC) value of less than 1500 ppm, less than 1200 ppm, less than 1000 ppm, less than 800 ppm, less than 700 ppm, less than 600 ppm, less than 500 ppm, less than 450 ppm, less than 400 ppm, or even less than 350 ppm, when measured by thermal desorption analysis according to test method VDA278.

According to yet another beneficial aspect, the multilayer construction has a Volatile Fogging Compound (FOG) value of less than 4000 ppm, less than 3000 ppm, less than 2500 ppm, less than 2000 ppm, less than 1500 ppm, or even less than 1300 ppm, when measured by thermal desorption analysis according to test method VDA278.

According to yet another beneficial aspect, the multilayer construction according to any of the preceding claims, wherein the layer of the precursor of a pressure sensitive adhesive has an odor score of no greater than 4, no greater than 3.5, no greater than 3.0, no greater than 2.5, or even no greater than 2.0, when measured according to the Odor Test described in the experimental section.

In another aspect, the present disclosure relates to a composite article comprising a multilayer construction as described above applied on at least part of the surface of the article.

In one advantageous aspect of the present disclosure, the composite article is selected from the group consisting of vehicle components, industrial machine components, household appliance components, and any combinations thereof.

In another advantageous aspect, the vehicle components of the present disclosure are selected from the group consisting of roofs, door panels, dashboards, floor panels, and any combinations thereof. More advantageously, the vehicles for use herein are selected from the group consisting of automobiles, truck, aircrafts, rockets, spaceships, trains, ships, vessels, boats, an any combinations thereof.

In another advantageous aspect, the household appliances of the present disclosure are selected from the group consisting of washing machines, dishwashing machines, laundry drying machines, refrigerators, and any combinations thereof.

In still another advantageous aspect, the industrial machines of the present disclosure are selected from the group consisting of energy generator systems, thermal management systems, air management systems, data storage systems, transportation systems, and any combinations thereof.

A composite article according to one exemplary aspect of the present disclosure is schematically represented in **FIG. 3****,** wherein the composite article **7** comprises a multilayer construction **1** comprising a layer of a precursor of a pressure sensitive adhesive composition **2,** a constraining layer **3,** a spacer layer **4** comprising a base layer **4a** and a plurality of spacer elements **4b** extending out of the base layer **4a,** and wherein the composite article **7** further comprises a vibrating panel **6** applied onto the multilayer construction **1.**

A composite article according to another exemplary aspect of the present disclosure is schematically represented in **FIG. 4****,** wherein the composite article **7** comprises a multilayer construction **1** comprising a first layer of a precursor of a pressure sensitive adhesive composition **2,** a constraining layer **3,** a spacer layer **4** comprising a base layer **4a** and a plurality of spacer elements **4b** extending out of the base layer **4a,** a second layer of a precursor of a pressure sensitive adhesive composition **5,** and wherein the composite article 7 further comprises a vibrating panel **6** adhered to the multilayer construction **1** via its second layer of a precursor of a pressure sensitive adhesive composition **5.**

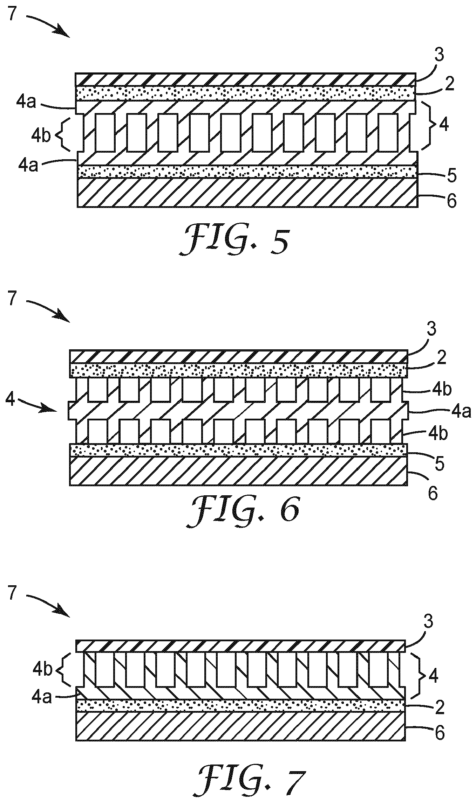

A composite article according to still another exemplary aspect of the present disclosure is schematically represented in **FIG. 5****,** wherein the composite article **7** comprises a multilayer construction **1** comprising a first layer of a precursor of a pressure sensitive adhesive composition **2,** a constraining layer **3,** a spacer layer **4** comprising two base layers **4a** and a plurality of spacer elements **4b** extending out of the base layer **4a,** a second layer of a precursor of a pressure sensitive adhesive composition **5,** and wherein the composite article **7** further comprises a vibrating panel **6** adhered to the multilayer construction **1** via its second layer of a precursor of a pressure sensitive adhesive composition **5.**

A composite article according to still another exemplary aspect of the present disclosure is schematically represented in **FIG. 6****,** wherein the composite article **7** comprises a multilayer construction **1** comprising a first layer of a precursor of a pressure sensitive adhesive composition **2,** a constraining layer **3,** a spacer layer **4** comprising a base layers **4a** and two pluralities of spacer elements **4b** extending out of the base layer **4a,** a second layer of a precursor of a pressure sensitive adhesive composition **5,** and wherein the composite article **7** further comprises a vibrating panel **6** adhered to the multilayer construction **1** via its second layer of a precursor of a pressure sensitive adhesive composition **5.**

A composite article according to still another exemplary aspect of the present disclosure is schematically represented in **FIG. 7****,** wherein the composite article **7** comprises a multilayer construction **1** comprising a layer of a precursor of a pressure sensitive adhesive composition **2,** a constraining layer **3,** a spacer layer **4** comprising a base layer **4a** and a plurality of spacer elements **4b** extending out of the base layer **4a,** and wherein the composite article **7** further comprises a vibrating panel **6** adhered to the multilayer construction **1** via its layer of a precursor of a pressure sensitive adhesive composition **2.**

In another aspect, the present disclosure relates to a method of manufacturing a multilayer construction as described above, which comprises the steps of:
a) providing at least one layer of a precursor of a pressure sensitive adhesive composition comprising a (viscoelastic) radiation-curable (co)polymeric base component having a weight-average molecular weight (M_{w}) no greater than 500.000 g/mol;
b) providing at least one constraining layer;
c) optionally, providing at least one spacer layer; and
d) applying the at least one constraining layer onto the first major surface of the at least one layer of a precursor of a pressure sensitive adhesive composition; and
e) optionally, applying the at least one spacer layer onto the second major surface of the at least one layer of a precursor of a pressure sensitive adhesive composition;

In one advantageous aspect of the disclosure, the method further comprises the step of applying a second layer of a precursor of a pressure sensitive adhesive composition on the major surface of the at least one (kinetic) spacer layer opposite to the major surface of the at least one (kinetic) spacer layer which is in contact with the first layer of a precursor of a pressure sensitive adhesive composition. Advantageously, the steps of applying the various layers onto each other are performed by lamination.

In still another aspect, the present disclosure relates to a method of manufacturing a composite article, which comprises the step of applying a multilayer construction as described above on at least part of the surface of an article as described above.

In yet another aspect of the present disclosure, it is provided a method of damping vibration (and/or noise) of a vibrating article or surface, which comprises the step of applying a multilayer construction as described above on at least part, or in a close proximity, of the vibrating article or surface.

In still another aspect, the present invention relates to the use of a multilayer construction as described above for industrial applications, in particular for construction, household and transportation applications, more in particular for body-in-white bonding applications for the automotive industry, and more in particular for damping operations for the automotive, aeronautic and aerospace industries.

In yet another aspect, the present invention relates to the use of a multilayer construction as described above for damping vibration (and/or noise) of a vibrating article or surface.

In yet another aspect, the present invention relates to the use of a (layer of a) precursor of a pressure sensitive adhesive composition as described above for damping vibration (and/or noise) of a vibrating article or surface.

### EXAMPLES

The invention is further illustrated by the following examples. These examples are merely for illustrative purposes only and are not meant to be limiting on the scope of the appended claims.

### Test Methods applied:

### Oberst Loss factor Test

The damping behaviour of the exemplary multilayer constructions is measured using the Oberst method according to DIN 53440 and ISO 5721. Using this method, the damping performance is determined by vibrational excitation of a steel beam covered with damping material and clamped at the uncovered end. The system damping loss factor can be calculated from the shape and width of so-called transfer functions at bending resonance modes. The measurements are performed in an environmental chamber at temperatures between 0°C and 60°C with a temperature increment of 20°C, and at single bending resonant frequencies (resonance orders 2, 3, and 4).

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅ and
FOG value - the sum of the semi-volatile and heavy compounds from n-C₁₄ to n-C₃₂

For measuring the VOC and FOG values, multilayer construction samples of 30mg +/- 5mg are weighed directly into empty glass sample tubes. The volatile and semi-volatile organic compounds are extracted from the samples into the gas stream and are then re-focused onto a secondary trap prior to injection into a GC for analysis. An automated thermal desorber (Markes International Ultra-UNITY system) is hereby used for the VDA 278 testing.

The test method comprises two extraction stages:
- VOC analysis, which involves desorbing the sample at 90°C for 30 minutes to extract VOC's up to n-C₂₅. This is followed by a semi-quantitative analysis of each compound as µg toluene equivalents per gram of sample.
- FOG analysis, which involves desorbing the sample at 120°C for 60 minutes to extract semi-volatile compounds ranging from n-C₁₄ to n-C₃₂. This is followed by semi-quantitative analysis of each compound as µg hexadecane equivalents per gram of sample.

The VOC values expressed are the average of two measurements per sample. The higher value of the measurements is indicated as the result, as described in the VDA278 test method. In order to determine the FOG value, the second sample is retained in the desorption tube after the VOC analysis and reheated to 120 °C for 60 minutes.

### Odor test:

The odor test is executed based on a method derived from VDA test method 270 C3 as per the following procedure.

The samples of the exemplary multilayer constructions having an area of about 200 cm² are placed into 1000 mL glass bottles which are placed in an oven at 80°C. After 2 hours, the bottles are taken from the oven and allowed to cool to a temperature of 60°C and then rated by six testers according to the scale used in VDA270 (see below). The testing is performed in two rounds so every tester rates every sample 2 times.

| | |
|---|---|
| 1 | Not perceptible |
| 2 | Strongly offensive |
| 3 | Clearly perceptible |
| 4 | Offensive |
| 5 | Strongly offensive |
| 6 | Unbearable |

### Raw materials used:

The raw materials and starting products used are summarized in Table 1 below.

**Table 1: Raw material list.**

| Name | Description | Supplier |
|---|---|---|
| **AcResin A204** | UV-curable acrylate copolymer. | BASF |
| **AcResin A250** | UV-curable acrylate copolymer. | BASF |
| **AcResin A260** | UV-curable acrylate copolymer. | BASF |
| **ATP S-4710 AG** | Polyacrylic adhesive tape having a total thickness of 0.10 mm. | ATP Adhesive Systems |

### Examples:

### General preparation of the multilayer constructions (Ex.1 to Ex.5) and comparative multilayer constructions (CE-1 and CE-2):

A kinetic spacer layer is produced from polypropylene resin as described in U. S. Patent No. 5,792,411 (Morris et al.), whereby the spacer layer comprises a plurality of cylindrical stem elements (acting as kinetic spacer elements) which have a diameter of about 0.76 mm and which are spaced apart from each other approximately by a distance of 1.35 mm. The cylindrical stem elements are about 0.44 mm high and they extend from a base layer having a thickness of about 0.12 mm.

Details of the layers used for the exemplary multilayer constructions are shown in Table 2. The exemplary 2-layer constructions (Examples 1 to 3) are as schematically represented in **FIG. 1****.** The exemplary 4-layer constructions (Examples 4 to 5) are as schematically represented in **FIG. 2****,** with the exception that the base layer **4a** of the spacer layer **4** is further provided with a second layer of a precursor of a pressure sensitive adhesive composition **5.** The kinetic spacer elements of the exemplary constructions extend from the base layer **4a** towards the direction of the constraining layer **3.**

The exemplary constructions are prepared by manual lamination of the different layers, starting with the constraining layer **3** and the layer of a precursor of a pressure sensitive adhesive composition **3,** and then adding the optional kinetic spacer layer **4** and the further optional precursor of a pressure sensitive adhesive composition **5.** After measurement of weight and thickness, the samples are laminated to a test panel (steel: 1 mm thick; area: 10mm x 240mm; covered area: 10mm x 210mm).

**Table 2: Exemplary multilayer constructions.**

| **Example** | 1 | 2 | 3 | CE-1 | 4 | 5 | CE-2 |
|---|---|---|---|---|---|---|---|
| Layer 1 | Alu (250 µm) | Alu (250 µm) | Alu (250 µm) | Alu (250 µm) | Alu (125 µm) | Alu (125 µm) | Alu (125 µm) |
| Layer 2 | A204 (100 µm) | A250 (100 µm) | A260 (100 µm) | ATP 4710 (100 µm) | A250 (100 µm) | A260 (100 µm) | ATP 4710 (100 µm) |
| Layer 3 | - | - | - | - | Kinetic spacer layer (2575 µm) | Kinetic spacer layer (2575 µm) | Kinetic spacer layer (2575 µm) |
| Layer 4 | - | - | - | - | A250 (100 microns) | A260 (100 microns) | ATP 4710 (100 microns) |

### Test results:

### Damping performance:

The samples are analyzed according to the Oberst Loss factor test method described above. The results are shown in Table 3 below.

**Table 3: Damping performance**

| Examples | Ex.1 | Ex.2 | Ex.3 | Ex.4 | Ex.5 |
|---|---|---|---|---|---|
| Measurement temperature (°C) | 0 | 0 | 0 | 10 | 10 |
| Bending resonance order | 4 | 4 | 4 | 3 | 3 |
| Oberst Loss factor | 0.110 | 0.115 | 0.103 | 0.315 | 0.300 |

As can be seen from the results shown in Table 3, the multilayer constructions according to the present disclosure (Ex.1 to Ex.5) are provided with excellent damping performance at various temperatures.

### VOC and FOG measurements:

The samples are analyzed according to the VDA 278 test method described above. The results are shown in Table 4 below (in ppm).

**Table 4: VOC and FOG measurements**

| Examples | Ex.3 | Ex.4 |
|---|---|---|
| VDA 278 VOC | 338 | 387 |
| VDA 278 FOG | 1252 | 1261 |

As can be seen from the results shown in Table 4, the multilayer constructions according to the present disclosure (Ex.3 to Ex.4) are provided with good overall VOC and FOG characteristics.

### Odour performance:

The samples are analyzed according to the odour test method described above. The results are shown in Table 5 below (in odour score).

**Table 5: Odour performance**

| Examples | Ex.1 | Ex.2 | CE-1 | Ex.4 | Ex.5 | CE-2 |
|---|---|---|---|---|---|---|
| Odour score | 2.2 | 2.7 | 4.1 | 2.5 | 3.0 | 4.0 |

As can be seen from the results shown in Table 5, the multilayer constructions according to the present disclosure (Ex.1 to Ex.2 and Ex.4 to Ex.5) are provided with reduced odour characteristics, when compared to multilayer constructions not according to the present disclosure (comparative examples CE-1 an CE-2).

## Claims

1. A multilayer construction which comprises:
a) at least one layer of a precursor of a pressure sensitive adhesive composition comprising a radiation-curable (co)polymeric base component having a weight-average molecular weight (M_{w}) no greater than 500.000 g/mol;
b) at least one constraining layer; and
c) optionally, at least one spacer layer.

2. A multilayer construction according to claim 1, wherein the (co)polymeric base component has a weight-average molecular weight (M_{w}) no greater than 480.000 g/mol, no greater than 450.000 g/mol, no greater than 420.000 g/mol, no greater than 400.000 g/mol, no greater than 380.000 g/mol, no greater than 350.000 g/mol, no greater than 320.000 g/mol, no greater than 300.000 g/mol, no greater than 290.000 g/mol, no greater than 280.000 g/mol, no greater than 270.000 g/mol, no greater than 260.000 g/mol, no greater than 250.000 g/mol, no greater than 240.000 g/mol, no greater than 230.000 g/mol, no greater than 220.000 g/mol, or even no greater than 210.000 g/mol.

3. A multilayer construction according to any of claim 1 or 2, wherein the (co)polymeric base component is selected from the group consisting of thermoplastic materials, elastomeric materials, thermoplastic elastomer materials, thermoplastic non-elastomeric materials, and any combinations or mixtures thereof.

4. A multilayer construction according to any of the preceding claims, wherein the (co)polymeric base component is selected from the group consisting of polyacrylics, rubber-based elastomeric materials, rubber-based non-elastomeric materials, polycarbonates, polyacrylonitriles, polyvinyl chlorides, alkylene-vinyl acetate copolymers, alkylene-acrylic acid copolymers, polyurethanes, polyesters, polyamides, polyolefins, polyphenylene oxides, and any combinations or mixtures thereof.

5. A multilayer construction according to any of the preceding claims, wherein the radiation-curable (co)polymeric base component is free-radical curable, in particular curable with the provision of radiation, more in particular UV radiation, e-beam radiation or gamma radiation, more in particular UV-C radiation.

6. A multilayer construction according to any of the preceding claims, wherein the constraining layer is arranged adjacent to, and in contact with the layer of the pressure sensitive adhesive.

7. A multilayer construction according to any of the preceding claims, wherein the constraining layer comprises a material selected from the group consisting of metals, in particular selected from the group consisting of aluminum, titanium, stainless steel, and any combinations, mixtures or alloys thereof.

8. A multilayer construction according to any of the preceding claims, which further comprises at least one spacer layer, in particular a kinetic spacer layer.

9. A multilayer construction according to claim 8, wherein the spacer layer is arranged adjacent to, and in contact with the at least one layer of the pressure sensitive adhesive.

10. A multilayer construction according to any of claim 8 or 9, wherein the spacer layer is a kinetic spacer layer which comprises in particular multiple spacer elements.

11. A multilayer construction according to any of claims 8 to 10, wherein the kinetic spacer elements comprise a material selected from the group consisting of ceramics, glass, metals, carbon, clay, foamed polyurethane, plastics, and any combinations or mixtures thereof.

12. A multilayer construction according to any of the preceding claims, which is a damping construction, in particular suitable for damping a vibrating surface.

13. A method of manufacturing a multilayer construction according to any of claims 1 to 12, which comprises the steps of:
a) providing at least one layer of a precursor of a pressure sensitive adhesive composition comprising a radiation-curable (co)polymeric base component having a weight-average molecular weight (M_{w}) no greater than 500.000 g/mol;
b) providing at least one constraining layer;
c) optionally, providing at least one spacer layer; and
d) applying the at least one constraining layer onto the first major surface of the at least one layer of a precursor of a pressure sensitive adhesive composition; and
e) optionally, applying the at least one spacer layer onto the second major surface of the at least one layer of a precursor of a pressure sensitive adhesive composition.

14. A composite article comprising a multilayer construction according to any of claims 1 to 12 applied on at least part of the surface of the article.

15. Use of a multilayer construction according to any of claims 1 to 12 for industrial applications, in particular for construction, household and transportation applications, more in particular for body-in-white bonding applications for the automotive industry, and more in particular for damping operations for the automotive, aeronautic and aerospace industries.
